# EUROPÄISCHE PATENTSCHRIFT

(11) **EP 1 376 809 B1**
(45) Veröffentlichungstag und Bekanntmachung des Hinweises auf die Patenterteilung: **05.10.2005**
(21) Anmeldenummer: 03019828.7
(22) Anmeldetag: 24.12.1998
(51) Int. Cl.: H02G 5/10

(54) **Abschnitt einer Hochspannungsanlage mit Kühlmitteln**
Section of a high voltage installation provided with cooling means
Region d'une installation à haute tension munie de moyens de refroidissement

(43) Veröffentlichungstag der Anmeldung: 02.01.2004
(62) Teilanmeldung aus: 98811265.2
(73) Patentinhaber: ABB Schweiz AG, 5400 Baden (CH)
(72) Erfinder: Kuebler, Guenter, 8125 Zollikerberg (CH); Parneix, Sacha, 68100 Mulhouse (FR); Malfa, Enrico, 24050 Zanica (BG) (IT); Wilfert, Günter, 83626 Valley (DE)
(74) Vertreter: ABB Patent Attorneys

(56) Entgegenhaltungen:
- CH-A- 664 852
- US-A- 3 305 621

## Beschreibung

### TECHNISCHES GEBIET

Diese Anmeldung ist eine Teilanmeldung zur Europäischen Patentanmeldung EP 1 022 830 A1, deren gesamter Offenbarungsgehalt im vollumfänglichen Wortlaut hiermit durch Bezugnahme als Bestandteil der Beschreibung aufgeführt gilt.

Die Erfindung bezieht sich auf einen Abschnitt einer elektrischen Hochspannungsanlage nach dem Oberbegriff von Anspruch 1. Diese Anlage ist zum Übertragen grosser elektrischer Leistung im Mega- bis Gigawattbereich geeignet. Die hierbei auftretenden Ströme bzw. Spannungen liegen im kA- bzw. kV-Bereich. Eine typische Anlage umfasst mehrphasige Generatorableitungen, in denen in den einzelnen Phasen Betriebsströme zwischen 5 und 30 kA und Betriebsspannungen von beispielsweise 15 oder 21 kV auftreten. Eine solche Hochspannungsanlage weist Abschnitte auf, in denen infolge von verhältnismässig grossen Stromverlusten eine starke Erwärmung auftritt. Einer erheblichen Erwärmung sind Abschnitte ausgesetzt, in denen der Strom durch einen Kontaktübergang, etwa eine Schaltstelle, geführt wird. Solche Schaltstellen sind im allgemeinen Generatorschalter.

### STAND DER TECHNIK

Generatorschalter werden üblicherweise über natürliche Konvektion und Strahlung gekühlt. Sind solche Schalter ungekapselt ausgeführt, so wird die Verlustleistung des Stromleiters in Form von Wärme auf einen die Kontaktanordnung des Schalters enthaltenden Löschkammerisolator mit vertikal geführten Kühlrippen übertragen. Die vom Löschkammerisolator aufgenommene Wärme wird durch Konvektion und Strahlung an die Umgebung abgegeben. Solche Generatorschalter werden von der Firma ABB High Voltage Technologies Ltd. Zürich/Switzerland mit der Typenbezeichnung HEI 1 ... HEI 5 vertrieben. Darüber hinaus vertreibt die vorgenannte Firma mit der Typenbezeichnung HEC3/HEC4 auch Generatorschalter, bei denen der Stromleiter und der Löschkammerisolator in einem mit Isoliergas, insbesondere mit Luft, gefüllten Gehäuse angeordnet sind. Die im Stromleiter gebildete und überwiegend an den Löschkammerisolator geführte Wärme wird dann über natürliche Konvektion und Strahlung an das Gehäuse abgegeben. Die Wärmeabgabe erfolgt dabei durch die sich einstellenden Temperaturunterschiede zwischen Stromleiter bzw. Löschkammerisolator und Gehäuse. Die vom Gehäuse aufgenommene Wärme wird über natürliche Konvektion und Strahlung an die Umgebung aufgrund des Temperaturunterschiedes zwischen Gehäuse und Umgebung abgeführt. Der Wärmefluss in einem solchen System stellt sich von selbst ein, ist hauptsächlich von geometrischen Abmessungen, verwendeten Materialien und Oberflächenkonfigurationen abhängig und wird durch die Mechanismen der Wärmeabgabe limitiert. Ist der Generatorschalter dreiphasig ausgebildet, wobei die drei Phasen nebeneinander angeordnet sind, so weist das Gehäuse der in der Mitte angeordneten Phase immer die höchsten Temperaturen auf, da die Seitenwände keine Strahlungsenergie abgeben können, und muss dann besonders intensiv gekühlt werden.

Die Anmeldung nimmt Bezug auf den Stand der Technik gemäss dem U. S. Pat. No. 3, 305, 621. Dort wird eine aktive Kühlvorrichtung mit Gasdeionisierungsvorrichtung für einphasig oder dreiphasig gekapselte Stromleiter offenbart. Gezeigt werden axiale, durch externen Ventilator angetriebene Kühlgasströmungen entlang der Stromleiter, die in einem Umlenkgehäuse umgelenkt und ineinander übergeführt und im Fehlerstromfall deionisiert werden. Im Umlenkgehäuse sind durch horizontale Platten horizontale Strömungskanäle definiert. An den Platten sind Strömungsregulierungsmittel vorhanden. Das Kühlgas strömt also forciert und horizontal innerhalb des gekapselten Gehäuses eines jeden Stromleiters. Das Kühlgas wird zwischen den Stromleitergehäusen ausgetauscht. Es muss daher in dem Umlenkgehäuse wiederaufbereitet, nämlich durch Deionisierung dielektrisch verfestigt werden, bevor es in einen benachbarten Stromleiter umgelenkt werden kann.

In dem Patent CH 664 852 wird eine Kühlvorrichtung für Schaltzellen einer Hochspannungsschaltanlage offenbart. Die Schaltzellen sind durch Gehäusewände voneinander getrennt und stellen belüftete Schotträume dar, welche die gekapselten elektrischen Komponenten der Schaltanlage wie Leistungsschalter, Sammelschienen, Messwandler und Kabelabgänge beherbergen. Zwischen zwei benachbarten Schaltzellen ist ein Lüftungsraum angeordnet, der im unteren Bereich Zuströmöffnungen zur Zuführung von Aussenluft und in der seitlichen Gehäusewand zu einem Schottraum Einblasöffnungen zur Weiterleitung der Aussenluft in den Schottraum aufweist. Im Dach des Schottraums sind Abströmöffnungen für die Kühlluft angeordnet. Die Kühlluft wird also von aussen via Lüftungsraum und durch die Einblasöffnungen an die zu kühlenden elektrischen Apparaturen geströmt, dort erwärmt und dann durch die Abströmöffnungen im Dach der Schaltzelle abgeströmt. Der Lüftungsraum selber ist nach oben und hinten verschlossen, so dass er nur über die Schaltzelle bzw. den Schottraum entlüftet werden kann. Der konvektiv aufsteigende Luftstrom ist also streckenweise horizontal geführt und ist daher einem erheblichen Strömungswiderstand ausgesetzt. In der Schaltzelle umströmt die Kühlluft die elektrischen Apparate allseitig und grossräurnig. Es gibt in der belüfteten Schaltzelle keinen Kanal zur Bündelung und intensivierten konvektiven Abströmung der Kühlluft. Aus den genannten Gründen wird für eine effiziente Kühlung die Kühlluftströmung durch ein Gebläse unterstützt.

### DARSTELLUNG DER ERFINDUNG

Es stellt sich deshalb die Aufgabe, einen Abschnitt für eine Hochspannungsanlage der eingangs genannten Art mit Kühlmitteln zu versehen, die möglichst einfach aufgebaut ist und dennoch eine erhebliche Erhöhung des Anlagenstroms ermöglicht, ohne dass die geometrischen Abmessungen der Anlage verändert werden.

Diese Aufgabe wird erfindungsgemäss durch die Merkmale der unabhängigen Ansprüche gelöst.

Die Erfindung besteht in einem Abschnitt einer elektrischen Hochspannungsanlage, insbesondere eines Generatorschalters, mit mindestens drei jeweils einen Stromleiter aufnehmenden Gehäusen, welche an Gehäuseseitenwänden nebeneinander angeordnet sind, wobei die Gehäuse unter Bildung vertikal ausgerichteter Kanäle mit Abstand voneinander angeordnet sind, wobei ferner in mindestens einem der Kanäle eine parallel zu den begrenzenden Seitenwänden der benachbarten Gehäuse geführte erste Zwischenwand angeordnet ist.

Erfindungsgemäss ist also in mindestens einem der Kanäle parallel zu den begrenzenden Seitenwänden dieses Kanals eine Zwischenwand angeordnet. Diese Zwischenwand nimmt von den den Kanal begrenzenden Seitenwänden Strahlungsenergie auf, welche dann infolge der Kaminwirkung aus dem Kanal entfernt werden kann.

Diese Kaminwirkung kann durch eine oder mehrere ausserhalb der Gehäuse angebrachte Strömungsquelle(n) unterstützt werden.

Die Zwischenwand verringert den Volumenstrom und damit die Leistung der aussenliegenden Strömungsquellen. Der Kanal sollte eine solche Breite aufweisen, dass der durch den Kanal geführte Volumenstrom mit oder ohne Zwischenwand nicht gestört und die ihn bildende Luft nicht zu stark aufgeheizt wird.

Eine besonders gute Wärmeabgabe der Zwischenwand an den infolge Konvektion und/oder der zusätzlichen Strömungsquellen aufsteigenden Luftstrom wird durch in die Zwischenwand eingeformte oberflächenvergrössernde Mittel erreicht. Solche Mittel können vertikal geführte Wellen und/oder Längsrippen umfassen, können aber auch eine parallel zur Zwischenwand geführte weitere Zwischenwand umfassen, welche in besonders vorteilhafter Weise mit der Zwischenwand durch vertikal geführte Längsrippen verbunden sein kann.

Die Erfindung hat auch die mindestens eine Zwischenwand selber und eine dreiphasig ausgebildete elektrische Hochspannungsanlage umfassend einen Anlagenabschnitt mit mindestens einer erfindungsgemässen Zwischenwand zum Gegenstand.

### KURZE BESCHREIBUNG DER ZEICHNUNGEN

Weitere Vorteile und Anwendungen der Erfindung ergeben sich aus der nun folgenden Beschreibung anhand der Figuren. Dabei zeigen
- Fig. 1 und 2: jeweils eine Aufsicht auf einen quer zu den Stromleitern geführten Schnitt durch zwei erfindungsgemäss ausgeführte Abschnitte einer dreiphasig ausgebildeten Hochspannungsanlage; und
- Fig. 3 bis 5: jeweils eine Draufsicht auf den Anlagenabschnitt nach Fig. 1.

### WEGE ZUR AUSFÜHRUNG DER ERFINDUNG

In allen Figuren bezeichnen gleiche Bezugszeichen auch gleichwirkende Teile.

Typischerweise führt der Stromleiter 3 Betriebsströme von 5 bis 30 kA bei Betriebsspannungen von 10 bis 36 kV. Infolge ohmscher Verluste, welche insbesondere an Kontaktübergängen beträchtlich sein können, erwärmt sich der Stromleiter 3 erheblich. Die im Stromleiter gebildete Wärme wird über natürliche Konvektion und Strahlung an das Gehäuse 1S abgegeben.

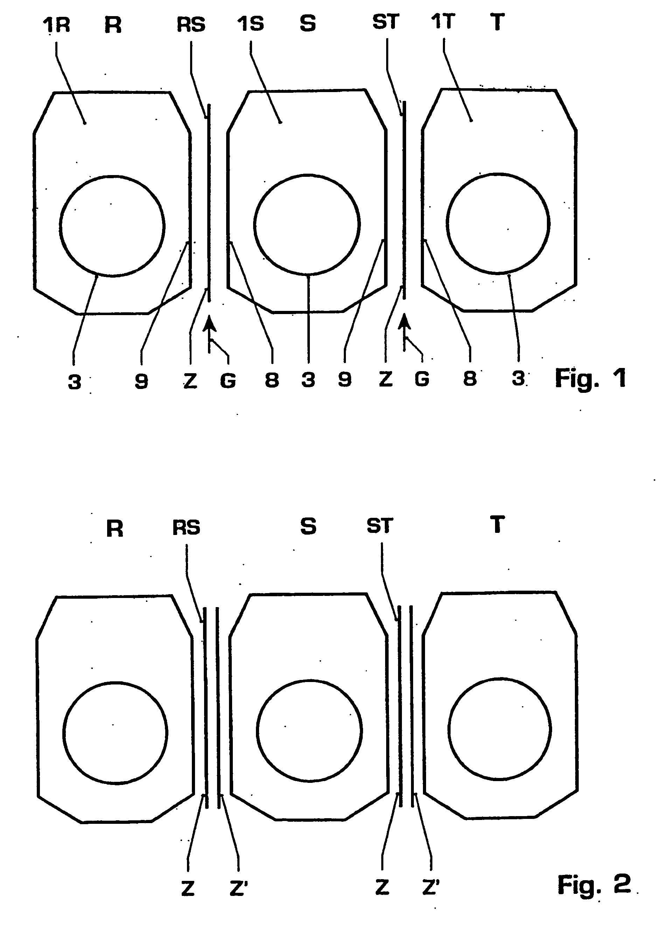

In dem in Figuren 1 und 2 dargestellten Anlagenabschnitt sind die den einzelnen Phasen zugeordneten Gehäuse 1R, 1S und 1T unter Bildung vertikal ausgerichteter Kanäle RS und ST mit Abstand zueinander angeordnet. Im mittleren der drei Gehäuse 1S können mit Vorteil in den beiden Figuren 1 und 2 nicht dargestellte Gebläse angeordnet sein. Die an die Gehäuseseitenwände 8 und 9 des Gehäuses 1S geführte Wärme wird durch die Kaminwirkung der Kanäle RS und ST weggeführt. Zusätzlich ist eine parallel zu den begrenzenden Seitenwänden 9 und 8 der benachbarten Gehäuse 1R und 1S bzw. 1S und 1T geführte Zwischenwand Z im Kanal RS bzw. ST angeordnet. In dieser Zwischenwand werden keine Verluste erzeugt und kann sich so ein Temperaturunterschied zwischen der Gehäuseseitenwand 9 bzw. 8 oder 9 bzw. 8 und der Zwischenwand Z einstellen. Somit kann von den Gehäuseseitenwänden 8 bzw. 9 an die Zwischenwand Z Strahlungsenergie abgegeben werden. Die durch die Strahlungsenergie erwärmte Zwischenwand wird durch freie Konvektion der Umgebungsluft gekühlt. Die zusätzliche Wärmeabfuhr beträgt bis zu ca. 10 % der Gesamtverlustwärme, wenn die Zwischenwand Z - wie Fig. 1 entnommen werden kann - in der Mitte zwischen beiden Gehäuseseitenwänden 9 und 8 angeordnet und lediglich glatt ausgebildet ist. Die Zwischenwand ist mit Vorteil thermisch leitend mit dem Gehäuse, z. B. 1S verbunden oder ist sogar integraler Bestandteil des Gehäuses.

Wie aus Fig. 2 ersichtlich ist, kann in einer weiteren Ausführungsform des Anlagenabschnitts nach der Erfindung parallel zur Zwischenwand Z eine weitere Zwischenwand Z' angeordnet sein. Bei dieser Ausführungsform wird die Wärmeabgabe an die Konvektionsströmung zusätzlich erhöht. Um eine noch bessere Wärmeabgabe zu erzielen, sollten die beiden Zwischenwände durch vertikal geführte Längsrippen verbunden sein.

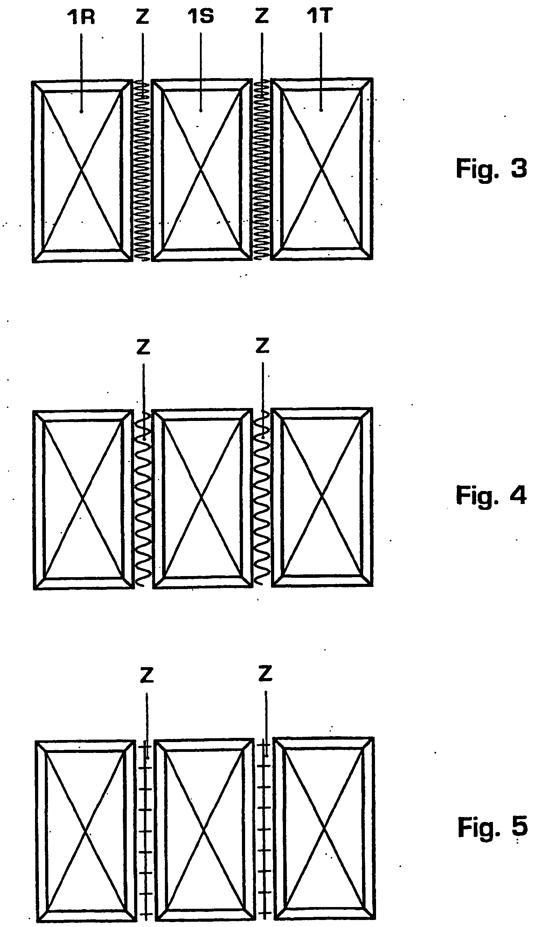

In den aus den Figuren 3 bis 5 entnehmbaren Ausführungsformen weist die Zwischenwand oberflächenvergrössernde Mittel auf, durch welche die Wärmeabgabe an die natürliche Konvektionsströmung zusätzlich verbessert wird. Solche Mittel umfassen mit Vorteil eine Zwischenwand Z mit gewellter Struktur. Die Struktur bildet vertikal geführte Abzugskanäle für die Konvektionsströmung und enthält Wellen, welche eng (Fig. 3) oder weit (Fig. 4) ausgebildet sein können, oder Längsrippen (Fig. 5). Um die freie Konvektionsströmung nicht zu behindern, sollten die Gehäuse 1R und 1S bzw. 1S und 1T einen Mindestabstand voneinander aufweisen.

Zusätzlich kann die Wärmeabgabe durch eine durch die Kanäle RS bzw. ST forciert geführte Strömung verbessert werden. Zu diesem Zweck kann ein oder können zwei oder auch mehr diese forcierte Strömung erzeugendes Aussengebläse bzw. erzeugende Aussengebläse vorgesehen sein. Ein solches Aussengebläse ist in Fig. 1 symbolisch als Pfeil dargestellt und mit dem Bezugszeichen G versehen.

### BEZUGSZEICHENLISTE

- 1R, 1S, 1T: Gehäuse
- 3: Stromleiter
- 8, 9: Gehäuseseitenwände
- G: Aussengebläse
- R, S, T: Phasen
- RS, ST: Kanäle
- Z, Z': Zwischenwände

## Patentansprüche

1. Abschnitt einer elektrischen Hochspannungsanlage, insbesondere eines Generatorschalters, mit mindestens drei jeweils einen Stromleiter (3) aufnehmenden Gehäusen (1R, 1S 1T), welche an Gehäuseseitenwänden (8, 9) nebeneinander angeordnet sind, **dadurch gekennzeichnet, dass** die Gehäuse (1R, 1S, 1T) unter Bildung vertikal ausgerichteter Kanäle (RS, ST) mit Abstand voneinander angeordnet sind und in mindestens einem der Kanäle (RS, ST) eine parallel zu den begrenzenden Seitenwänden (9, 8) der benachbarten Gehäuse (1R, 1S) geführte erste Zwischenwand (Z) angeordnet ist, wobei die Zwischenwand (Z) von den den Kanal (RS, ST) begrenzenden Seitenwänden (9, 8) Strahlungsenergie aufnimmt und die durch Strahlungsenergie erwärmte Zwischenwand (Z) durch freie Konvektion der Umgebungsluft gekühlt wird und **dadurch** eine zusätzliche Wärmeabfuhr erreicht wird.

2. Anlagenabschnitt nach Anspruch 1, **dadurch gekennzeichnet, dass** die erste Zwischenwand (Z) oberflächenvergrössernde Mittel aufweist.

3. Anlagenabschnitt nach Anspruch 2, **dadurch gekennzeichnet, dass** die oberflächenvergrössernden Mittel vertikal geführte Wellen und/oder Längsrippen umfassen.

4. Anlagenabschnitt nach einem der Ansprüche 1-3, **dadurch gekennzeichnet, dass** in dem mindestens einen Kanal (RS, ST) eine parallel zur ersten Zwischenwand (Z) geführte zweite Zwischenwand (Z') angeordnet ist.

5. Anlagenabschnitt nach Anspruch 4, **dadurch gekennzeichnet, dass** die erste und die zweite Zwischenwand (Z, Z') durch vertikal geführte Längsrippen verbunden sind.

6. Anlagenabschnitt nach einem der Ansprüche 1-5, **dadurch gekennzeichnet, dass** zur Verbesserung der Wärmeabgabe mindestens eine der Erzeugung einer Gasströmung in den Kanälen (RS, ST) dienende Strömungsquelle (G) vorgesehen ist.

7. Anlagenabschnitt nach einem der Ansprüche 1-6, **dadurch gekennzeichnet, dass** der Kanal (RS, ST) eine solche Breite aufweist, dass der durch den Kanal (RS, ST) geführte Volumenstrom mit der Zwischenwand (Z, Z') nicht gestört und die ihn bildende Luft nicht zu stark aufgeheizt wird.

8. Anlagenabschnitt nach einem der Ansprüche 1-7, **dadurch gekennzeichnet, dass** in der Zwischenwand (Z) keine Verluste erzeugt werden, so dass sich ein Temperaturunterschied zwischen der Gehäuseseitenwand (8, 9) und der Zwischenwand (Z) einstellt.

9. Zwischenwand (Z, Z') für einen Anlagenabschnitt gemäss einem der vorangehenden Ansprüche.

10. Dreiphasig ausgebildete elektrische Hochspannungsanlage, **gekennzeichnet durch** einen Anlagenabschnitt gemäss einem der Ansprüche 1-8.

## Claims

1. A section of an electrical high-voltage system, in particular a generator circuit breaker, having at least three housings (1R, 1S, 1T) which each accomodate a conductor (3) and which are arranged side by side to one another at housing side walls (8, 9), **characterized in that** the housings (1R, 1S, 1T) are arranged at a distance form one another, thereby forming vertically aligned channels (RS, ST), and that in at least one of the channels (RS, ST) there is arranged a first intermediate wall (Z), which is aligned parallel to the bounding side walls (9, 8) of the adjacent housings (1R, 1S), with the intermediate wall (Z) absorbing radiation energy from the side walls (9, 8) which are bounding the channel (RS, ST), and the intermediate wall (Z) which has been heated by the radiation energy being cooled by free convection of the surrounding air, this resulting in additional heat dissipation.

2. The section of a system according to Claim 1, **characterised in that** the first intermediate wall (Z) has means for enlarging its surface area.

3. The section of a system according to Claim 2, **characterised in that** the means enlarging the surface area comprise vertically running corrugations and/or longitudinal ribs.

4. The section of a system according to one of the Claims 1 to 3, **characterised in that** in the at least one channel (RS, ST), there is arranged a second intermediate wall (Z') aligned parallel to the first intermediate wall (Z).

5. The section of a system according to Claim 4, **characterised in that** the first and the second intermediate wall (Z, Z') are connected by means of vertically running longitudinal ribs.

6. The section of a system according to one of the Claims 1 to 5, **characterised in that** at least one flow source (G), serving to produce a gas flow in the channels (RS, ST), is provided to improve the heat emission.

7. The section of a system according to one of the Claims 1 to 6, **characterised in that** the channel (RS, ST) has a width such that the volume flow guided through the channel (RS, ST) is not interfered with, with the intermediate wall (Z, Z') being present, and the air forming the said volume flow is not heated up too severely.

8. The section of a system according to one of the Claims 1 to 7, **characterised in that** in the intermediate wall (Z) no losses are produced such that a temperature difference is established between the housing side wall (8, 9) and the intermediate wall (Z).

9. Intermediate wall (Z, Z') for a section of a system according to one of the preceding Claims.

10. Three-phase electrical high-voltage system, **characterised by** a section of the system according to one of the Claims 1 to 8.

## Revendications

1. Section d'une installation électrique haute tension, notamment d'un disjoncteur de générateur, comprenant au moins trois boîtiers (1R, 1S, 1T) recevant chacun un conducteur (3), lesquels sont disposés les uns à côté des autres sur des parois latérales de boîtier (8, 9), **caractérisée en ce que** les boîtiers (1R, 1S, 1T) sont disposés à distance les uns des autres en formant des canaux orientés verticalement (RS, ST) et, dans au moins l'un des canaux (RS, ST), est prévue une première paroi intermédiaire (Z) guidée parallèlement aux parois latérales (9, 8) du boîtier voisin (1R, 1S) adjacentes, la paroi intermédiaire (Z) recevant de l'énergie de rayonnement des parois latérales (9, 8) délimitant le canal (RS, ST) et la paroi intermédiaire (Z) réchauffée par l'énergie de rayonnement étant refroidie par convexion libre de l'air environnant et de ce fait une dissipation de chaleur supplémentaire étant obtenue.

2. Section d'installation selon la revendication 1, **caractérisée en ce que** la première paroi intermédiaire (Z) présente des moyens augmentant la surface.

3. Section d'installation selon la revendication 2, **caractérisée en ce que** les moyens augmentant la surface comprennent des ondulations et/ou des nervures longitudinales orientées verticalement.

4. Section d'installation selon l'une quelconque des revendications 1 à 3, **caractérisée en ce qu'**une deuxième paroi intermédiaire (Z') guidée parallèlement à la première paroi intermédiaire (Z) est disposée dans l'au moins un canal (RS, ST).

5. Section d'installation selon la revendication 4, **caractérisée en ce que** la première et la deuxième paroi intermédiaire (Z, Z') sont connectées par des nervures longitudinales guidées verticalement.

6. Section d'installation selon l'une quelconque des revendications 1 à 5, **caractérisée en ce que** pour l'amélioration de la dissipation de la chaleur, on prévoit au moins une source d'écoulement (G) servant à produire un écoulement gazeux dans les canaux (RS, ST).

7. Section d'installation selon l'une quelconque des revendications 1 à 6, **caractérisée en ce que** le canal (RS, ST) présente une largeur telle que le débit volumique guidé à travers le canal (RS, ST) ne soit pas perturbé par la paroi intermédiaire (Z, Z') et que l'air le formant ne soit pas chauffé trop fortement.

8. Section d'installation selon l'une quelconque des revendications 1 à 7, **caractérisée en ce qu'**aucune perte n'est produite dans la paroi intermédiaire (Z), de sorte qu'une différence de température s'établit entre la paroi latérale de boîtier (8, 9) et la paroi intermédiaire (Z).

9. Paroi intermédiaire (Z, Z') pour une section d'installation selon l'une quelconque des revendications précédentes.

10. Installation électrique haute tension réalisée sous forme triphasée, **caractérisée par** une section d'installation selon l'une quelconque des revendications 1 à 8.
